# EUROPÄISCHE PATENTANMELDUNG

(11) **EP 1 750 034 A1**
(43) Veröffentlichungstag der Anmeldung: **07.02.2007**
(21) Anmeldenummer: 05016879.8
(22) Anmeldetag: 03.08.2005
(51) Int. Cl.: F16H 1/16

(54) **Stellantrieb mit getriebeseitigem Axialausgleichselement**

(71) Anmelder: SIEMENS AKTIENGESELLSCHAFT, 80333 München (DE)
(72) Erfinder: Viernekes, Gerald, 97437 Hassfurt (DE); Zaps, Klaus, 97332 Volkach (DE)

(57) **Zusammenfassung**

Der Stellantrieb weist eine Motoreinheit sowie eine Getriebeeinheit auf, wobei ein Ende einer von der Motoreinheit angetriebenen Motor- oder Getriebewelle axial und radial in einem Topflager geführt ist. Das Ende der Motor- oder Getriebewelle ist in einer entsprechenden zylindrischen Aussparung im Gehäuse des Stellantriebs eingesetzt. Erfindungsgemäß weist das Topflager (11) überwiegend radial ausgebildete Federarme (13) auf, die sich außerhalb der zylindrischen Aussparung (22) in axialer Richtung am Gehäuse (10) des Stellantriebs abstützen. Es wird vorteilhaft ein Axialausgleichselement in ein an sich bekanntes Topflager integriert. Ein derartiges Topflager (11) fixiert nicht nur axial und radial das Ende der Motor- oder Getriebewelle (5), sondern bewirkt zugleich über die in einem gewissen Bereich federnd nachgebenden Federarme (11) den Toleranz- oder Axialausgleich. Dadurch reduziert sich der Bauteil- und Montageaufwand für einen Stellantrieb.

## Beschreibung

Die Erfindung betrifft einen Stellantrieb, welcher eine Motoreinheit sowie eine Getriebeeinheit aufweist, wobei ein Ende einer von der Motoreinheit angetriebenen Motor- oder Getriebewelle axial und radial in einem Topflager geführt ist, welches in einer entsprechenden zylindrischen Aussparung in einem Gehäuse des Stellantriebs eingesetzt ist.

Stellantriebe, beispielsweise Fensterheber-Antriebe oder Antriebe zur Betätigung des Schiebedaches, sind bereits bekannt. Sie weisen eine Motoreinheit und eine Getriebeeinheit auf. Die Getriebeeinheit kann z.B. ein Stirnradgetriebe oder ein Schneckengetriebe mit einem Schneckenrad und mit einer als Schneckenwelle ausgebildeten Getriebewelle umfassen. Die Motoreinheit besteht aus einem in einem Motorgehäuse angeordneten Elektromotor, der mit einer Motorwelle und einem auf der Motorwelle befestigten, eine Vielzahl von Lamellen enthaltenden Läuferpaket, versehen ist. Die Motor- und Getriebewelle können auch einteilig ausgeführt sein.

Zum Ausgleich von fertigungs- und montagebedingten Toleranzen ist der Einsatz von Axialspielausgleichselementen bekannt. Diese können zwischen der Motorwelle und der Getriebewelle, zwischen der Getriebewelle und dem Getriebegehäuse und/oder zwischen der Motorwelle und dem Motorgehäuse positioniert sein. Im Falle einer gemeinsamen Motor- und Getriebewelle sind Axialspielausgleichselemente im motor- oder getriebeseitigen Endbereich vorgesehen.

Mittels derartiger Ausgleichselemente kann jedoch aus fertigungs- und montagetechnischen Gründen kein vollständiger Ausgleich der Toleranzen erfolgen. Es ist stets ein Restspiel von beispielsweise bis zu 0,2 mm vorhanden.

Zur Lösung des Problems ist es bekannt, den verbleibenden Spalt zu messen. Der Axialausgleich wird dann über verschieden starke Ausgleichselemente bewerkstelligt.

Alternativ kann ein gewisser Axialausgleich über Federelemente, wie z.B. über Druckfedern oder Elastomere, bewirkt werden, die als separates Element in einem Topflager eingelegt werden. Aufgrund ihrer geringen Federsteifigkeit bilden diese Federelemente jedoch eher eine Anschlagsdämpfung für die Motor- oder Getriebewelle bei einem Lastwechsel oder bei einer Drehrichtungsumkehrung des Stellantriebs.

Die Aufgabe der Erfindung besteht darin, einen Stellantrieb anzugeben, der ohne separate Axialausgleichselemente auskommt.

Diese Aufgabe wird durch einen Stellantrieb mit den im Anspruch 1 angegebenen Merkmalen gelöst. Vorteilhafte Ausgestaltungen und Weiterbildungen der Erfindung ergeben sich aus den abhängigen Ansprüchen 2 bis 8.

Bei dem erfindungsgemäßen Stellantrieb weist das Topflager überwiegend radial ausgebildete Federarme auf, die sich außerhalb der zylindrischen Aussparung in axialer Richtung am Gehäuse des Stellantriebs abstützen.

Der große Vorteil der Erfindung liegt in der Integration eines Axialausgleichselements in ein an sich bekanntes Topflager. Ein derartiges Topflager fixiert nicht nur axial und radial ein Ende der Motor- oder Getriebewelle, sondern bewirkt zugleich über die in einem gewissen Bereich federnd nachgebenden Federarme als Toleranz- oder Axialausgleich.

Die Federung basiert dabei auf elastische Biegemomente, welche zum einen durch die Geometrie der Federarme, wie z.B. durch deren Biegewinkel und Materialdicke, und zum anderen durch die Materialeigenschaften, wie z.B. durch den Elastizitätsmodul des verwendeten Materials des Topflagers, bestimmt sind.

Dadurch reduziert sich weiterhin vorteilhaft der Bauteil- und Montageaufwand für einen Stellantrieb.

Vorzugsweise sind die Federarme oder Federlaschen für einen Axialfederweg von max. 1 mm im dauerfesten Bereich ausgebildet. Dadurch kann ausgehend von einem Nennmaß einer im zusammengebauten Stellantrieb eingespannten Motor- oder Getriebewelle eine obere und untere Abweichung vom Nennmaß von max. 0,5 mm vorteilhaft toleriert und ausgeglichen werden.

In einer Ausgestaltungsform sind die Federarme derart ausgebildet, dass diese in Summe eine axial wirkende Federhärte von 20 bis 60 N/mm aufweisen. Im Beispiel von 4 Federarmen liegt die Federhärte eines einzelnen Federarms aufgrund der parallel wirkenden Federkräfte in einem entsprechenden Bereich von 5 bis 15 N/mm.

Derartige Werte für die Federhärte sind vorteilhaft für kompakte Stellantriebe in einem Leistungsbereich bis ca. 500 W.

Vorzugsweise sind das Topflager und die geometrisch dazu korrespondierende zylindrische Aussparung im Gehäuse des Stellantriebs so aufeinander abgestimmt, dass im entspannten Zustand der Federarme zwischen der Außenseite des Topflagerbodens und dem Boden der zylindrischen Aussparung ein Axialfederweg von 0,2 bis 1,0 mm verbleibt.

Dadurch entsteht vorteilhaft eine Begrenzung des Axialfederwegs, so dass im Falle eines Lastwechsels oder einer Drehrichtungsumkehr des Stellantriebs der Topflagerboden gegen den Boden der zylindrischen Aussparung vorteilhaft anschlagen kann. Dabei betragen die in solchen Fällen auftretenden Kräfte ein Vielfaches im Vergleich zu den axial gewünschten maximalen Vorspannkräften der Motor- oder Getriebewelle, wie z.B. von 25 N.

In einer bevorzugten Ausführungsform weist das Gehäuse des Stellantriebs in axialer Richtung eine weitere zylindrische Aussparung mit einem erweiterten Durchmesser aufweist. Der Lagertopf des Topflagers weist in korrespondierender Weise zu der weiteren zylindrische Aussparung eine zylindrische Aufweitung auf.

Zum einen wird vorteilhaft für die Federarme bzw. für die Federlaschen ein größerer Federungswinkel möglich. Zum anderen bildet die zylindrische Aufweitung eine Einführ- und Zentrierhilfe für das Einsetzen der Motor- oder Getriebewelle beim Zusammenbau des Stellantriebs.

In einer besonderen Ausführungsform weist die einem Ende der Motor- oder Getriebewelle gegenüberliegende Außenseite des Topflagerbodens eine elastische Beschichtung auf. Diese Seite kann z.B. mit einer dünnen Lage Naturkautschuk von weniger als 1 mm beschichtet sein. Ein Anschlag der Motor- oder Getriebewelle gegen das Gehäuse des Stellantriebs erfolgt, wie zuvor beschrieben, vor allem bei einem Lastwechsel oder bei einer Drehrichtungsumkehrung des Stellantriebs.

Das Topflager wird dadurch vorteilhaft um die Funktion einer Anschlagsdämpfung erweitert. Durch die dünne elastische Beschichtung wird der Anschlag der Motor- oder Getriebewelle derart bedämpft, dass das entstehende Anschlagsgeräusch sich vorteilhaft in einem zulässigen und nicht störenden Rahmen bewegt.

Das erfindungsgemäße Topflager ist in einem Stanz- und Tiefziehvorgang aus einem Blech, insbesondere aus einem Federstahlblech, herstellbar. Nach dem Ausstanzen der zum Topflager gehörenden zweidimensionalen Stanzkontur wird das Topflager mittels eines Tiefziehverfahrens in seine endgültige räumliche Form gebogen bzw. verformt.

Dadurch ist ein derartiges Topflager besonders einfach und kostengünstig herstellbar.

Weitere vorteilhafte Eigenschaften der Erfindung ergeben sich aus deren beispielhafter Erläuterung anhand der Figuren. Es zeigt:
- FIG 1: eine Schnittzeichnung eines beispielhaften Stellantriebs mit einer Getriebe- und Motoreinheit und mit einer beispielhaft im Getriebegehäuse des Stellantriebs gelagerten Getriebewelle gemäß der Erfindung,
- FIG 2: eine perspektivische Ansicht eines beispielhaften Topflagers mit erfindungsgemäßen Federarmen als einstückiges Bauelement,
- FIG 3: eine vergrößerte Darstellung des getriebeseitigen Endes der Getriebewelle mit einem Topflager gemäß FIG 1 in einem entspannten Zustand der erfindungsgemäßen Federarme, und
- FIG 4: eine vergrößerte Darstellung des getriebeseitigen Endes der Getriebewelle mit einem Topflager gemäß FIG 3 in einem gespannten Zustand der erfindungsgemäßen Federarme.

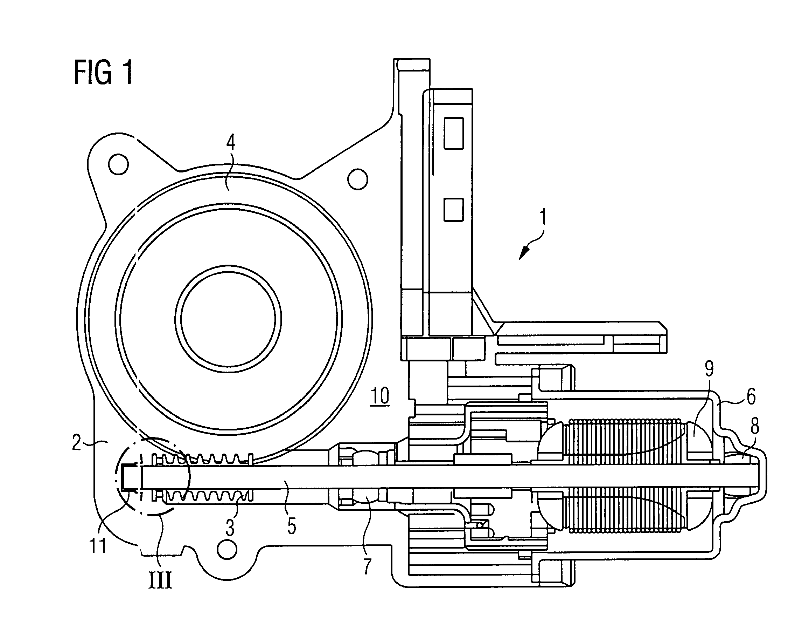

FIG 1 zeigt eine Schnittzeichnung eines beispielhaften Stellantriebs 1 mit einer Getriebeeinheit 2 und einer Motoreinheit 6 gemäß der Erfindung. Die Getriebeeinheit 2 weist ein Gehäuse 10 des Stellantriebs auf, welches sich im Beispiel der FIG 1 aus einem Getriebegehäuse und einem Motorgehäuse zusammensetzt. Im Getriebegehäuse sind ein Schneckenrad 4 sowie eine in das Schneckenrad 4 eingreifende Getriebewelle 5 mit einer Schneckenverzahnung 3 untergebracht. Die Motoreinheit 6 besteht aus einem Motorgehäuse und einem darin untergebrachten Läufer 9 zum motorischen Antrieb der Getriebewelle 5. Die Getriebewelle 5 ist motorseitig in einem der Getriebeeinheit 2 gegenüberliegenden Lager 7 sowie in einem weiteren Lager 8 geführt, welches das motorseitige Ende der Getriebewelle 5 aufnimmt.

Im Beispiel der FIG 1 ist das getriebeseitige Ende der Getriebewelle 5 in einem Topflager 11 geführt, welches die Getriebewelle 5 axial und radial führt. Die Ausführung des erfindungsgemäßen Topflagers 11 ist in den nachfolgenden Figuren im Detail dargestellt.

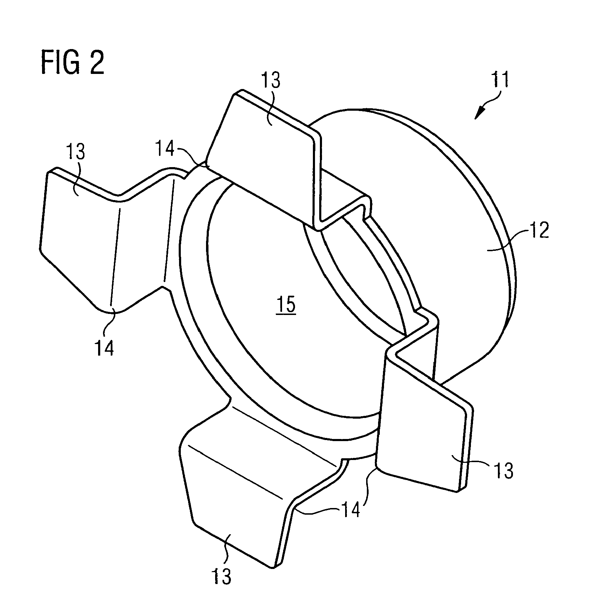

FIG 2 zeigt eine perspektivische Ansicht eines beispielhaften Topflagers 11 mit erfindungsgemäßen Federarmen 13 als einstückiges Bauelement. Im Beispiel der FIG 2 weist das Topflager 11 vier Federarme bzw. Federlaschen 13 auf. Ausführungsformen mit nur einem umlaufenden Federarm bzw. Federkragen 13 sowie Ausführungsformen mit einer höheren Anzahl sind ebenso denkbar. Die Federarme 13 sind insbesondere flächig ausgebildet. Weiterhin weisen die Federarme 13 eine Biegestelle bzw. eine Knickstelle 14 auf, die zur Bruchvermeidung mit einem Mindestradius versehen ist.

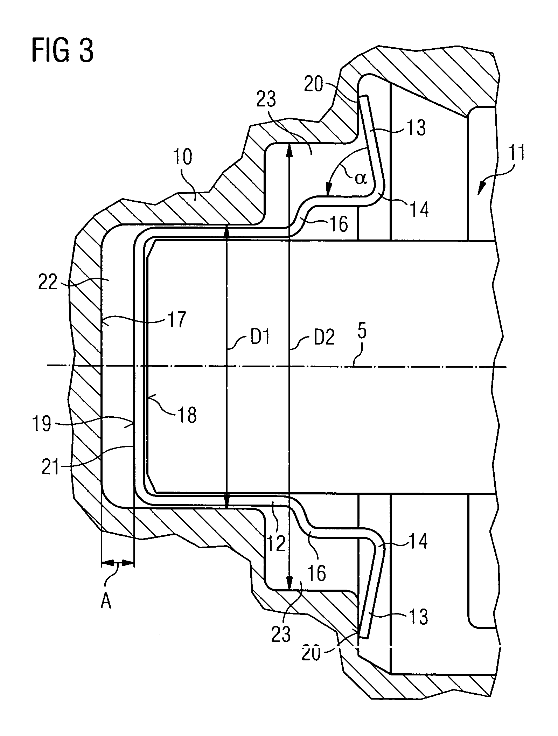

FIG 3 zeigt eine vergrößerte Darstellung des getriebeseitigen Endes der Getriebewelle 5 mit einem Topflager 11 gemäß FIG 1 in einem entspannten Zustand der erfindungsgemäßen Federarme 13. Das Topflager 11 weist einen Lagertopf 12 auf, der zum Großteil in einer dazu geometrisch abgestimmten zylindrischen Aussparung 22 im Getriebegehäuse eingesetzt ist. Dabei ist der Innendurchmesser D1 der zylindrischen Aussparung 22 geringfügig größer als der Außendurchmesser des zylindrischen Lagertopfs 12. Dadurch wird eine gute radiale Führung der Getriebewelle 5 ermöglicht.

Im Beispiel der FIG 3 weist das Getriebegehäuse gemäß einer Ausführungsform der Erfindung bereits eine weitere zylindrische Aussparung 23 in axialer Richtung zur Motoreinheit 6 auf. Die weitere und zur ersten zylindrischen Aussparung 22 konzentrisch erweiterte Aussparung 23 weist einen weiteren Innendurchmesser D2 auf, der größer ist als der Innendurchmesser D1 der ersten Aussparung 22. In diese erweiterte Aussparung 23 kann sich gemäß der Erfindung eine zylindrische Aufweitung 16 des Lagertopfs 12 erstrecken.

Im Beispiel der FIG 3 stützen sich die schräg radial ausgebildeten Federarme 13 in einem beispielhaften Winkel zwischen den jeweiligen beiden Federschenkeln von ca. 80° an einem Rand 20 im Getriebegehäuse axial ab. Der Rand 20 bildet hierzu eine plane und azimutale Auflagekante außerhalb der beiden zylindrischen Aussparungen 22, 23 aus.

Die nach außen gerichtete Seite 19 des Lagertopfbodens 18 weist gemäß einer weiteren Ausführungsform eine elastische Schicht 21, wie z.B. aus Naturkautschuk, als Anschlagdämpfung auf. Im Falle eines Drehrichtungswechsels oder Lastwechsels des Stellantriebs 1 schlägt dann der Boden 18 des Topflagers 11 gedämpft gegen den planen und kreisförmigen Boden der zylindrischen Aussparung 22. In diesem Fall weitet sich auch der Federwinkel α auf, wobei der gesamte zur Verfügung stehende Axialfederweg A aufgebraucht wird. Das Topflager 11 taucht dann sozusagen bis zum Anschlag in die zylindrische Aussparung 22 des Getriebegehäuses ein.

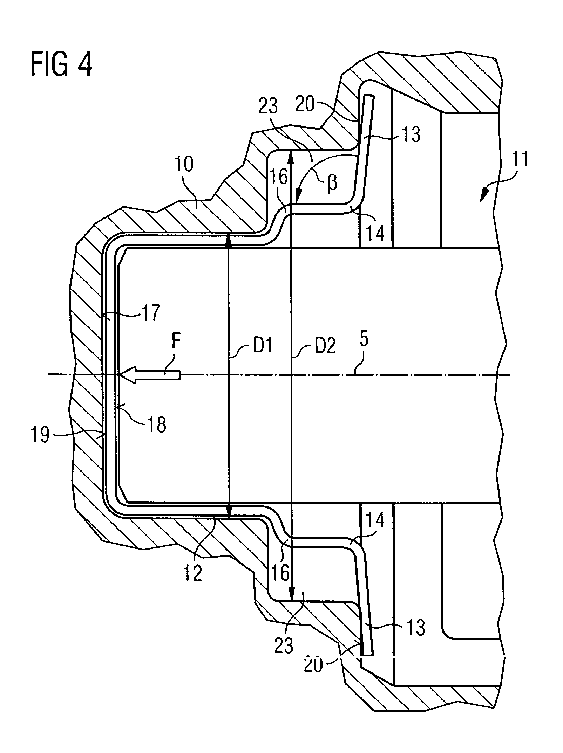

FIG 4 zeigt eine vergrößerte Darstellung des getriebeseitigen Endes der Getriebewelle 5 mit einem Topflager 11 gemäß FIG 3 in einem gespannten Zustand der erfindungsgemäßen Federarme 13. Im Vergleich zur Darstellung gemäß FIG 3 weisen die Federarme 13 nun einen Winkel β von ca. 110° zwischen den jeweiligen Schenkeln der Federarme 13 auf. Im Beispiel der FIG 4 ist dies zugleich der maximal mögliche Federungswinkel, da der maximale Axialfederweg A bereits ausgeschöpft ist.

## Patentansprüche

1. Stellantrieb, welcher eine Motoreinheit sowie eine Getriebeeinheit aufweist, wobei ein Ende einer von der Motoreinheit angetriebenen Motor- oder Getriebewelle axial und radial in einem Topflager geführt ist, welches in einer entsprechenden zylindrischen Aussparung in einem Gehäuse des Stellantriebs eingesetzt ist,
**dadurch gekennzeichnet,**
**dass** das Topflager (11) überwiegend radial ausgebildete Federarme (13) aufweist, die sich außerhalb der zylindrischen Aussparung (22) axial am Gehäuse des Stellantriebs (10) abstützen.

2. Stellantrieb nach Anspruch 1,
**dadurch gekennzeichnet,**
**dass** die Federarme (13) für einen Axialfederweg (A) von max. 2 mm im dauerfesten Bereich ausgebildet sind.

3. Stellantrieb nach Anspruch 1 oder 2,
**dadurch gekennzeichnet,**
**dass** die Federarme (13) derart ausgebildet sind, dass diese in Summe eine axial wirkende Federhärte von 20 bis 60 N/mm aufweisen.

4. Stellantrieb nach einem der vorigen Ansprüche,
**dadurch gekennzeichnet,**
**dass** das Gehäuse (10) des Stellantriebs in axialer Richtung zur Motoreinheit (6) eine weitere zylindrische Aussparung (23) mit einem erweiterten Durchmesser (D2) aufweist, und dass das Topflager (11) einen Lagertopf (12) aufweist, welcher in korrespondierender Weise zur weiteren zylindrischen Aussparung (23) eine zylindrische Aufweitung (16) aufweist.

5. Stellantrieb nach einem der vorigen Ansprüche,
**dadurch gekennzeichnet,**
**dass** das Topflager (11) und die zylindrische Aussparung (22) so aufeinander abgestimmt sind, dass im entspannten Zustand der Federarme (13) zwischen der Außenseite (19) des Topflagerbodens (18) und dem Boden (17) der zylindrischen Aussparung (22) ein Axialfederweg (A) von 0,2 bis 1,0 mm verbleibt.

6. Stellantrieb nach einem der vorigen Ansprüche,
**dadurch gekennzeichnet,**
**dass** die dem Ende der Motor- oder Getriebewelle (5) gegenüberliegende Außenseite (15) des Topflagerbodens (18) eine elastische Beschichtung (21) aufweist.

7. Stellantrieb nach einem der vorigen Ansprüche,
**dadurch gekennzeichnet,**
**dass** das Topflager (11) in einem Stanz- und Tiefziehvorgang aus einem Blech herstellbar ist.

8. Stellantrieb nach Anspruch 7,
**dadurch gekennzeichnet,**
**dass** das Blech ein Federstahlblech ist.
